# EUROPÄISCHE PATENTSCHRIFT

(11) **EP 1 231 088 B1**
(45) Veröffentlichungstag und Bekanntmachung des Hinweises auf die Patenterteilung: **27.02.2008**
(21) Anmeldenummer: 01126373.8
(22) Anmeldetag: 07.11.2001
(51) Int. Cl.: B60H 1/00

(54) **Mehrkanalige Klimaanlage mit einheitlich leistungsgesteuertem Heizkörper**
Multichannel air-conditioning device with unitary power controlled heat exchanger
Dispositif de conditionnement d'air à canaux multiples avec échangeur de chaleur unitaire à puissance contrôlée

(30) Priorität: 08.02.2001 DE 10106774
(43) Veröffentlichungstag der Anmeldung: 14.08.2002
(73) Patentinhaber: Behr France Rouffach SAS, 68250 Rouffach (FR)
(72) Erfinder: Klein, Henri, 68000 Colmar (FR)
(74) Vertreter: Wallinger, Michael

(56) Entgegenhaltungen:
- DE-A- 3 529 940
- DE-A- 19 652 523
- DE-A- 19 755 698
- DE-C- 19 816 332

## Beschreibung

Die Erfindung bezieht sich auf eine mehrkanalige Klimaanlage nach dem Oberbegriff des Anspruchs 1. Eine derartige Klimaanlage ist aus der DE-C-19816332 bekannt. Es ist ein zweiteiliges Schließglied vorgesehen, bei dem das eine Schließglied in jeder Stellung einen größeren Öffnungsquerschnitt abdeckt als das andere Schließglied.

Eine derartige Klimaanlage weist zwei oder mehr strömungstechnisch parallele Klimatisierungskanäle auf, die von einem Klimatisierungsmedium, wie Luft, durchströmbar sind. Zur Erwärmung des Klimatisierungsmediums dient für beide Kanäle ein gemeinsamer Heizkörper. Zu diesem Zweck kann ein erster Teil des Heizkörpers im einen und ein zweiter Teil im anderen Klimatisierungskanal liegen. Alternativ kann der Heizkörper in einem Kanal angeordnet sein, der sich erst stromabwärts des Heizkörpers in die mehreren parallelen Klimatisierungskanäle aufteilt. Der Heizkörper wird in seiner Heizleistung einheitlich von zugehörigen Heizleistungssteuermitteln gesteuert. Verwendung finden solche Klimaanlagen beispielsweise in Kraftfahrzeugen. So wird mit Zweizonen-Klimaanlagen eine getrennte Klimatisierung von Fahrer- und Beifahrerseite ermöglicht, und Vierzonen-Klimaanlagen erlauben zusätzlich noch eine getrennte Klimatisierung von Frontbereich einerseits und Fondbereich andererseits.

In der Offenlegungsschrift DE 197 43 823 A1 ist eine weitere Fahrzeugklimaanlage beschrieben, bei welcher der Heizkörper von einem z.B. von der Kühlflüssigkeit eines Fahrzeugmotors durchströmten Radiator gebildet ist, wobei seine Heizleistung mittels eines die Durchflussmenge an Heizflüssigkeit regulierenden Regelventils gesteuert wird. Von einem Verdampfer kommende Luft gelangt über den Radiator in zwei parallele Kanäle, die der getrennten Klimatisierung von Fahrer- und Beifahrerseite dienen. Konstruktionsbedingt heizt sich eine Hälfte des Radiators stärker auf. Um dies zu kompensieren, ist für den der wärmeren Radiatorhälfte zugeordneten, ersten Klimatisierungskanal ein seitlich am Radiator vorbeiführender Bypasskanal mit steuerbarer Bypassklappe vorgesehen. Im Betrieb wird dann die Heizleistung des Radiators so eingestellt, dass sich für den anderen, zweiten Klimatisierungskanal, in den ausschließlich über die kühlere Radiatorhälfte erwärmte Luft strömt, eine gewünschte Temperatur ergibt. Soweit diese Heizleistung im ersten Klimatisierungskanal zu einer zu hohen Temperatur führen würde, wird dies durch Kaltluftzufuhr über den Bypasskanal kompensiert. Dieses System ist zwar relativ einfach, jedoch in seiner Temperatursteuerungscharakteristik vergleichsweise beschränkt. So kann z.B. für den ersten Klimatisierungskanal, dem der Kaltluft-Bypasskanal zugeordnet ist, gegenüber dem anderen Klimatisierungskanal nur eine um so viel höhere Temperatur gewählt werden, wie sich die beiden Radiatorhälften in ihrer Heiztemperatur unterscheiden, da für den anderen Klimatisierungskanal keine Möglichkeit der Bypass-Kaltluftzufuhr gegeben ist.

Ein verbessertes Temperatursteuerungsverhalten für wenigstens zwei getrennte Klimatisierungskanäle lässt sich zwar durch einen ebenfalls bekannten Typ von Mehrkanal-Fahrzeugklimaanlagen erreichen, in denen ein geteilter Heizkörper verwendet wird, d.h. der Heizkörper ist so ausgelegt, dass sich seine den verschiedenen Klimatisierungskanälen zugeordneten Bereiche einzeln in ihrer Heizleistung steuern lassen. Dies erfordert jedoch eigene Heizleistungssteuermittel für jeden dieser Heizkörperbereiche.

Der Erfindung liegt als technisches Problem die Bereitstellung einer mehrkanaligen Klimaanlage der eingangs genannten Art zugrunde, bei der sich die Temperatur des Klimatisierungsmediums für die verschiedenen parallelen Klimatisierungskanäle bei relativ geringem Aufwand über einen relativ großen Temperaturbereich hinweg unterschiedlich sowie variabel und genau einstellen lässt.

Die Erfindung löst dieses Problem durch die Bereitstellung einer mehrkanaligen Klimaanlage mit den Merkmalen des Anspruchs 1. Bei dieser Klimaanlage ist für jeden der strömungstechnisch parallelen Klimatisierungskanäle ein Bypasskanal vorgesehen, der den Heizkörper umgeht. Zum wahlweisen Öffnen und Schließen der Bypasskanäle dient für wenigstens zwei der Bypasskanäle eine gemeinsame, verstellbare Absperrklappeneinheit mit je einer Absperrklappe für die beiden Bypasskanäle. Die Absperrklappeneinheit ist so ausgelegt, dass sie bei entsprechender Verstellung mit ihren Absperrklappen entweder beide Bypasskanäle geschlossen hält oder nur einen ersten Bypasskanal geschlossen hält und den anderen, zweiten Bypasskanal wenigstens teilweise freigibt oder letzteren geschlossen hält und den ersten Bypasskanal wenigstens teilweise freigibt.

Durch diese Systemauslegung kann die Temperatur des Klimatisierungsmediums für alle Klimatisierungskanäle über einen weiten Temperaturbereich hinweg variabel und genau eingestellt werden, wobei insbesondere auch relativ hohe Temperaturunterschiede zwischen den Klimatisierungskanälen erzielbar sind. Trotzdem erfordert die Klimaanlage vergleichsweise wenig Herstellungs- und Regelungsaufwand, da sie zum einen mit einem ungeteilten Heizkörper auskommt und zum anderen nicht für jeden der Bypasskanäle eine eigens ansteuerbare Absperrklappe mit den zugehörigen Klappensteuerungsmitteln erfordert. Vielmehr sind die Absperrklappen von wenigstens zwei Bypasskanälen Teil einer gemeinsamen, verstellbaren Absperrklappeneinheit.

Bei einer nach Anspruch 2 weitergebildeten Klimaanlage besitzt die Absperrklappeneinheit einen mittleren Nullstellungsbereich, aus dem heraus sie wahlweise in einer ersten oder einer entgegengesetzten zweiten Richtung verstellbar ist. Im Nullstellungsbereich sind beide Bypasskanäle geschlossen. Bei Verstellen der Absperrklappeneinheit in die eine oder andere Richtung wird dann der erste bzw. der zweite Bypasskanal geöffnet, während der jeweils andere Bypasskanal geschlossen bleibt. Das Umschalten zwischen einer Zufuhr von ungeheiztem Klimatisierungsmedium in den einen oder den anderen Klimatisierungskanal erfolgt dadurch vorteilhafterweise stets über den einstellungsmäßig mittleren Nullstellungsbereich.

Eine Weiterbildung der Erfindung nach Anspruch 3 stellt eine konstruktiv und funktionell vorteilhafte Klappenrealisierung zur Erfüllung der geforderten Absperrklappenfunktionen dar, indem die beiden Absperrklappen zwei Klappenflügel beinhalten, die axial nebeneinander an einer gemeinsamen Betätigungswelle drehfest gehalten sind. Durch eine Drehbewegung der Betätigungswelle werden daher beide Klappenflügel gemeinsam verstellt.

Vorteilhafte Gestaltungen der Klappenflügel und des umgebenden Bypasskanalgehäuses, die mit der gemeinsamen Anordnung der Klappenflügel an der Betätigungswelle korrespondieren, sind in den Ansprüchen 4 und 5 angegeben. So sind sowohl plattenförmige als auch sektorförmige Klappenflügel in Verbindung mit einer korrespondierenden Formung des Bypasskanalgehäuses im Bereich der von den Klappenflügeln abzusperrenden Kanalöffnungen möglich.

Vorteilhafte Ausführungsformen der Erfindung sind in den Zeichnungen dargestellt und werden nachfolgend beschrieben. Hierbei zeigen:
- Fig. 1: eine schematische Perspektivansicht eines motorkühlwassergespeisten Heizkörpers mit Schichtungsklappe und Kaltluft-Absperrklappeneinheit für eine mehrkanalige Fahrzeugklimaanlage,
- Fig. 2: eine schematische Draufsicht auf den Heizkörper-Klappen-Komplex von Fig. 1 mit vorgeschaltetem Verdampfer im eingebauten Zustand in einem Klimatisierungsgehäuse mit zwei Klimatisierungskanälen,
- Fig. 3: eine schematische Längsschnittansicht längs der Linie III-III oder IV-IV von Fig. 2,
- Fig. 4: schematische Schnittansichten je eines durch die Absperrklappeneinheit regulierbaren Kaltluft-Bypasskanals für die beiden Klimatisierungskanäle in drei unterschiedlichen Betriebsstellungen,
- Fig. 5: eine schematische Perspektivansicht eines weiteren Ausführungsbeispiels für die Kaltluft-Absperrklappeneinheit mit sektorförmigen Klappenflügeln und
- Fig. 6: eine schematische Schnittansicht entsprechend Fig. 4, jedoch mit der Absperrklappeneinheit von Fig. 5 und modifiziertem Bypasskanalgehäuse.

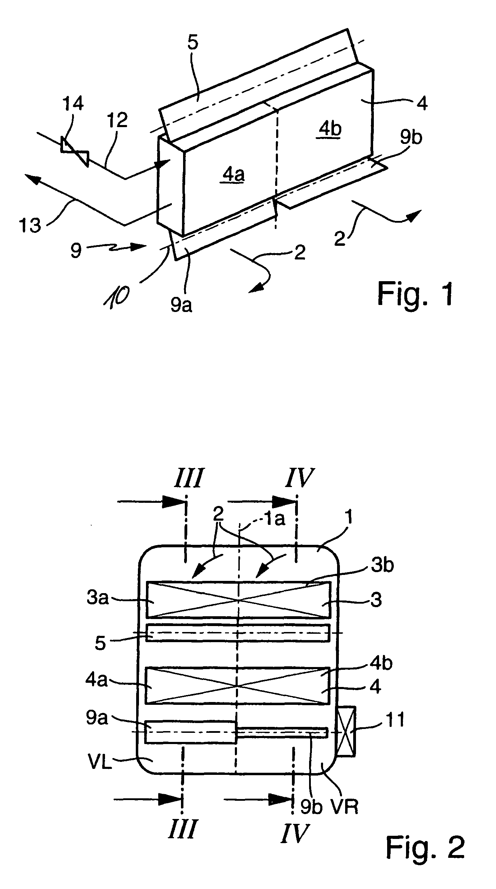

Die in den Fig. 1 bis 3 mit ihren hier interessierenden Komponenten schematisch gezeigte Fahrzeugklimaanlage beinhaltet ein Klimatisierungsgehäuse 1, in das in der Strömungsrichtung von zugeführter Luft 2 ein Verdampfer 3 und ein Heizkörper 4 hintereinanderliegend eingebracht sind. Über dem Heizköper 4 befindet sich eine übliche Schichtungsklappe 5, mit der Kaltluft am Heizkörper 4 vorbei primär einem Belüftungs-/Defrostauslass 6 des Klimatisierungsgehäuses 1 zugeführt werden kann, um eine gewünschte Temperaturschichtung zu erreichen. Zur Fußraumbelüftung führt vom Klimatisierungsgehäuse 1 ein Fußraumauslass 7 mit eintrittsseitiger Fußraumkanal-Absperrklappe 8 ab. Mittels entsprechender, nicht näher gezeigter Trennwände ist das Klimatisierungsgehäuse 1 entlang seiner vertikalen Längsmittenebene 1a in zwei strömungstechnisch parallele Klimatisierungskanäle VL, VR unterteilt, über die klimatisierende Luft getrennt einem vorderen linken bzw. einem vorderen rechten Fahrzeuginnenraumbereich zugeführt wird. Der Verdampfer 3 und der Heizkörper 4 sind mit je einer Hälfte 3a, 3b bzw. 4a, 4b dem einen bzw. dem anderen Klimatisierungskanal VL, VR zugeordnet.

Unterhalb des Heizkörpers 4 ist für jeden der beiden Klimatisierungskanäle VL, VR je ein den Heizkörper 4 umgehender Kaltluft-Bypasskanal B_{VL}, B_{VR} am Klimatisierungsgehäuse 1 ausgebildet. Der Durchlassquerschnitt dieser beiden nebeneinanderliegenden Bypasskanäle B_{VL}, B_{VR} ist durch eine gemeinsame Absperrklappeneinheit 9 regulierbar, die hierfür je einen plattenförmigen Klappenflügel 9a, 9b beinhaltet und um eine Betätigungswelle 10 drehbeweglich ist. Die beiden Klappenflügel 9a, 9b sind mit einem vorgegebenen Winkelversatz α axial nebeneinanderliegend drehfest an der gemeinsamen Betätigungswelle 10 gehalten, die von einem außen am Klimatisierungsgehäuse 1 angebrachten Schrittmotor 11, der als Klappenstellmotor fungiert, steuerbar um gewünschte Klappenverstellwinkel gedreht werden kann.

Wie in Fig. 1 angedeutet, ist der Heizkörper 4 vom Radiatortyp, der von heißem Motorkühlwasser gespeist wird, wozu er in den Kühlwasserkreislauf eines Antriebsverbrennungsmotors des Fahrzeugs über eine Einlassleitung 12 und eine Auslassleitung 13 geschaltet ist. Das heiße Motorkühlwasser durchströmt einheitlich den in seiner Struktur ungeteilten Heizkörper 4 und damit einheitlich seine beiden, je einem der beiden Klimatisierungskanäle VL, VR zugeordneten Hälften 4a, 4b. Die Heizleistung des Heizkörpers 4 wird durch ein die Durchflussmenge an heißem Motorkühlwasser regulierendes Regelventil 14 gesteuert, d.h. letzteres bildet zusammen mit seiner nicht gezeigten Ventilsteuerung die gemeinsamen Heizleistungssteuermittel zur einheitlichen Steuerung der Heizleistung der beiden Heizkörperhälften 4a, 4b für die zwei parallelen Klimatisierungskanäle VL, VR.

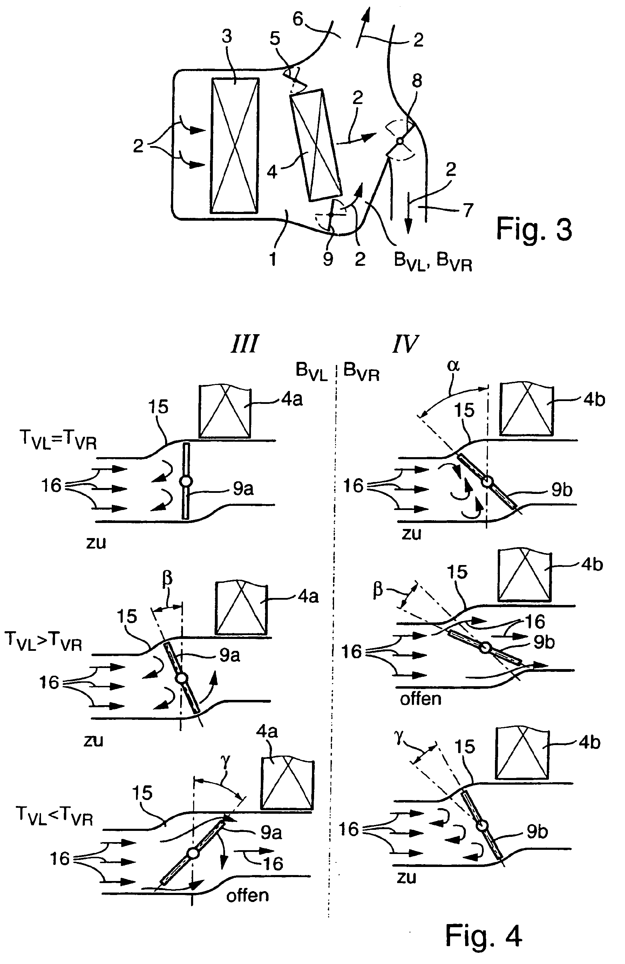

Im Betrieb kann durch geeignete Verstellung der Kaltluft-Absperrklappeneinheit 9 die Temperatur der Klimatisierungsluft in den beiden Klimatisierungskanälen VL, VR in gewünschter Weise gleich groß oder unterschiedlich eingestellt werden. Die drei unterschiedlichen Betriebssituationen sind in Fig. 4 in drei untereinanderliegenden Teilbildern anhand von schematischen Schnittansichten im Bereich des jeweiligen Kaltluft-Bypasskanals B_{VL}, B_{VR} veranschaulicht, wobei links jeweils ein Schnitt durch den einen, ersten Kaltluft-Bypasskanal B_{VL} des einen, ersten Klimatisierungskanals VL für den vorderen linken Innenraumbereich längs der Linie III-III von Fig. 2 und rechts ein entsprechender Schnitt durch den anderen, zweiten Bypasskanal B_{VR} längs der Linie IV-IV gezeigt ist, der zum anderen, zweiten Klimatisierungskanal VR für den vorderen rechten Innenraumbereich gehört.

Das obere Teilbild repräsentiert den Fall, dass gleich große Temperaturen T_{VL}=T_{VR} für die beiden Klimatisierungskanäle VL, VR gewünscht sind. In diesem Fall befindet sich die Absperrklappeneinheit in einer Nullstellung, in welcher sich der eine, erste Klappenflügel 9a für den ersten Bypasskanal B_{VL} in einer vertikalen Stellung befindet, während sich der andere, zweite Klappenflügel 9b entsprechend dem Winkelversatz α in einer um diesen Winkel α gegen die Vertikale geneigten Position befindet. Die Kontur der die beiden Bypasskanäle B_{VL}, B_{VR} definierenden Kanalgehäusewandung 15 ist im Bereich der Klappenflügel 9a, 9b bogenförmig gekrümmt derart gestaltet, dass jeder der beiden Bypasskanäle B_{VL}, B_{VR} vom zugehörigen Klappenflügel 9a, 9b vollständig abgesperrt bleibt, solange letzterer sich im Winkelbereich zwischen 0° und dem Versatzwinkel α im Gegenuhrzeigersinn bezüglich der Vertikale befindet. Dementsprechend sind in der als erstem Fall gezeigten Nullstellung der Absperrklappeneinheit beide Kaltluft-Bypasskanäle B_{VL}, B_{VR} vollständig geschlossen. Anstehende Kaltluft 16 wird daher nicht durchgelassen, so dass beide Klimatisierungskanäle VL, VR mit in gleicher Weise vom Verdampfer 3 und/oder vom Heizkörper 4 temperierter Klimatisierungsluft versorgt werden.

Das mittlere Teilbild von Fig. 4 zeigt die Betriebssituation, bei der für den vorderen linken Innenraumbereich Klimatisierungsluft höherer Temperatur T_{VL} bereitgestellt wird als für den vorderen rechten Innenraumbereich, d.h. T_{VL}>T_{VR}. Dies wird dadurch erreicht, dass die Absperrklappeneinheit ausgehend von ihrer im oberen Teilbild der Fig. 4 gezeigten Nullstellung im Gegenuhrzeigersinn gedreht wird. Mit zunehmendem Drehwinkel β gibt, wie gezeigt, der zweite Klappenflügel 9b den zweiten Bypasskanal B_{VR} zunehmend frei, so dass Kaltluft in entsprechender Menge unter Umgehung des Heizkörpers 4 weitergeleitet wird, die sich im zweiten Klimatisierungskanal VR mit der vom Heizkörper 4 kommenden Warmluft mischt und deren Temperatur absenkt. Gleichzeitig hält der erste Klappenflügel 9a den ersten Bypasskanal P_{VL} weiterhin vollständig geschlossen, so dass alle Luft für den ersten Klimatisierungskanal VL über den Heizkörper 4 geleitet wird.

Wenn eine Kaltluftzufuhr über beide Bypasskanäle B_{VL}, B_{VR} nicht notwendig ist, kann der zugehörige Absperrklappen-Verstellwinkel β auf einen dem Winkelversatz α entsprechenden Maximalwert βₘₐₓ=α begrenzt werden, bei dem der erste Bypasskanal B_{VL} noch vollständig geschlossen und der zweite Bypasskanal B_{VR} praktisch vollständig geöffnet ist.

Zur Temperaturregelung wird in dieser Betriebssituation die Heizleistung des Heizkörpers 4 so eingestellt, dass sich für den ersten Klimatisierungskanal VL die gewünschte Temperatur T_{VL} ergibt, und für den zweiten Klimatisierungskanal VR wird die Absperrklappeneinheit 9 um einen entsprechenden Verstellwinkel β so weit gedreht, dass die dadurch freigegebene Kaltluft-Bypassmenge zu der gewünschten niedrigeren Temperatur T_{VR} der dortigen Klimatisierungsluft führt.

Im unteren Teilbild ist die Betriebssituation gezeigt, in der für den ersten Klimatisierungskanal VL eine niedrigere Klimatisierungslufttemperatur gewünscht wird als für den zweiten Klimatisierungskanal VR, d.h. T_{VL}<T_{VR}. Dieser Betriebsfall ist ersichtlich bezüglich der Nullstellung der Absperrklappeneinheit 9 symmetrisch zum Betriebsfall im mittleren Teilbild von Fig. 4, d.h. die Absperrklappeneinheit 9 wird ausgehend von der Nullstellung um einen Verstellwinkel γ je im Uhrzeigersinn gedreht, wobei im allgemeinen der maximale Verstellwinkel γₘₐₓ wiederum kleiner als der Versatzwinkel α bleiben kann, so dass der zweite Klappenflügel 9b den zweiten Bypasskanal B_{VR} stets noch vollständig geschlossen hält. Der erste Klappenflügel 9a gibt hingegen mit größerem Verstellwinkel γ den ersten Bypasskanal B_{VL} zunehmend frei, wodurch eine entsprechende Kaltluftmenge für den ersten Klimatisierungskanal VL bereitgestellt wird.

Auch in diesem Betriebsfall wird die Heizleistung des Heizkörpers 4 wiederum so eingestellt, dass er für den wärmer zu temperierenden Klimatisierungskanal, in diesem Fall den zweiten Klimatisierungskanal VR, die gewünschte Klimatisierungslufttemperatur, hier T_{VR}, liefert, während für den anderen Klimatisierungskanal VL die vom Heizkörper 4 kommende Luft mit in entsprechender Menge durchgelassener Bypasskanal-Kaltluft 16 gemischt wird, um die gewünschte niedrigere Temperatur T_{VR} zu einzustellen.

Wie aus der obigen Erläuterung der drei möglichen Betriebsfälle deutlich wird, lässt sich die Klimatisierungslufttemperatur T_{VL}, T_{VR} für die beiden Klimatisierungskanäle VL, VR über einen weiten Bereich hinweg genau und unterschiedlich einstellen, und dies allein unter Verwendung des einen Heizkörper-Regelventils 14 und der einen, über die Betätigungswelle 10 und den Schrittmotor 11 antreibbaren Absperrklappeneinheit 9.

Es versteht sich, dass außer der in den Fig. 1 bis 4 gezeigten Realisierung der Absperrklappeneinheit 9 mit plattenförmigen Klappenflügeln 9a, 9b weitere Realisierungen derselben möglich sind, mit denen sich die von der Absperrklappeneinheit vorliegend geforderte, oben zu Fig. 4 erläuterte Funktionalität erfüllen lässt.

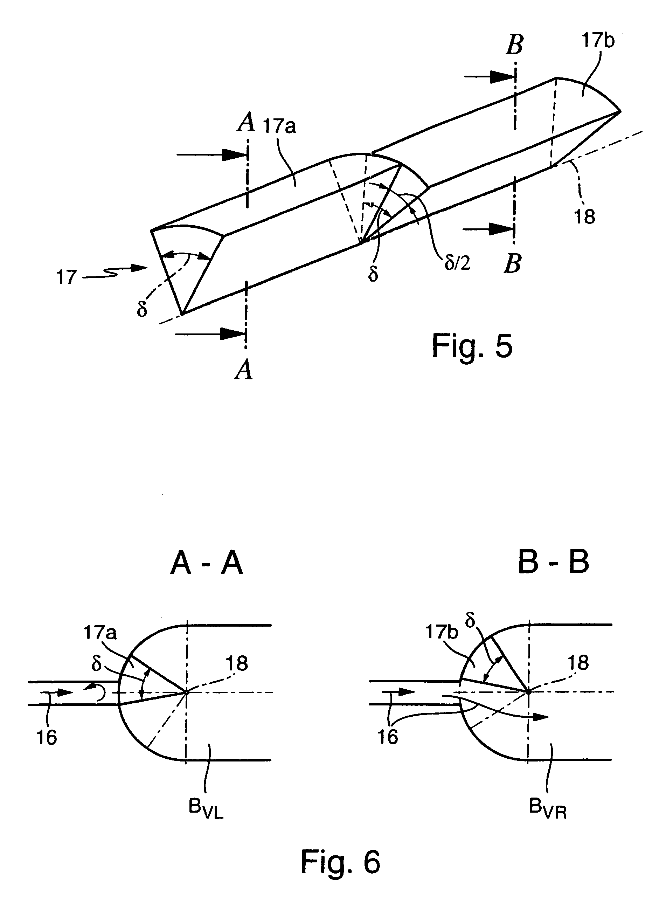

So zeigen die Fig. 5 und 6 ein Ausführungsbeispiel mit modifizierten Absperrklappenflügeln und daran angepasster, modifizierter Gestaltung des Bypasskanalgehäuses, während es im übrigen dem Ausführungsbeispiel der Fig. 1 bis 4 entspricht. Speziell beinhaltet die Absperrklappeneinheit 17 der Fig. 5 und 6 zwei Absperrklappen mit je einem im Querschnitt sektorförmigen Klappenflügel 17a, 17b, die entlang ihrer Spitzenkante drehfest an einer gemeinsamen Betätigungswelle 18 gehalten sind. Jeder sektorförmige Klappenflügel 17a, 17b ist in einem sich aufweitenden Bereich des zugehörigen Kaltluft-Bypasskanals B_{VL}, B_{VR} dergestalt platziert, dass er je nach Drehwinkelstellung mit seiner äußeren Mantelfläche den Übergang vom schmaleren eintrittsseitigen zum breiteren austrittsseitigen Bypasskanalbereich vollständig abzudecken oder wenigstens teilweise freizugeben vermag. Um die oben zur plattenförmigen Klappenflügelgestaltung von Fig. 4 beschriebene Absperrklappenfunktionalität auch mit den beiden sektorförmigen Klappenflügeln 17a, 17b zu erfüllen, ist deren Winkelausdehnung δ doppelt so groß gewählt wie der zum Verschließen der Bypasskanäle B_{VL}, B_{VR} erforderliche Winkelbereich δ/2. Gleichzeitig sind die beiden sektorförmigen Klappenflügel 17a, 17b mit einem Winkelversatz der Größe δ/2, d.h. um ihre halbe Winkelausdehnung versetzt, angeordnet.

In der Nullstellung der Absperrklappeneinheit 17 halten die beiden sektorförmigen Klappenflügel 17a, 17b mit ihrem über die Winkelbreite δ/2 überlappenden Mantelflächenbereich beide Bypasskanäle B_{VL}, B_{VR} vollständig geschlossen. Durch Drehung in der einen oder anderen Richtung um höchstens den Winkel δ/2 wird dann jeweils einer der beiden Bypasskanäle B_{VL}, B_{VR} sukzessive geöffnet, während der andere vollständig geschlossen bleibt.

Fig. 6 veranschaulicht die Betriebssituation bei vollständig geschlossen gehaltenem erstem Bypasskanal B_{VL} und geöffnetem zweitem Bypasskanal B_{VR}, entsprechend der Betriebssituation des mittleren Teilbildes von Fig. 4, mit durchgezogenen Klappenflügellinien. Des weiteren ist in Fig. 6 mit gestrichelten Linien der Betriebsfall bei geöffnetem erstem Bypasskanal B_{VL} und geschlossenem zweitem Bypasskanal B_{VR} angedeutet.

Alternativ zu den gezeigten Ausführungsbeispielen kann die Absperrklappeneinheit für die Kaltluft-Bypasskanäle B_{VL}, B_{VR} aus zwei separaten Absperrklappen aufgebaut sein, d.h. mit zwei Klappenflügeln als separate Bauteile, die durch entsprechende Kopplungsmittel kinematisch miteinander so gekoppelt sind, dass sie die oben zu Fig. 4 erläuterte Funktionalität der Absperrklappeneinheit bewirken. Auch in diesem Fall kann die Absperrklappeneinheit über ein gemeinsames Betätigungsmittel, wie einen Schrittmotor oder einen anderen Stellmotor oder von Hand, betätigt werden. Die Absperrklappen müssen dabei nicht unbedingt unterhalb des Heizkörpers liegen, sondern können alternativ oberhalb oder seitlich des Heizkörpers positioniert sein.

Des weiteren kann alternativ zur gezeigten Winkelversetzung der beiden Klappenflügel ein entsprechender Versatz der Gehäusekonturen der beiden Bypasskanäle B_{VL}, B_{VR} im Klappenflügelbereich vorgesehen sein, so dass dann die oben zu Fig. 4 erläuterte Funktionalität der Absperrklappeneinheit mit winkelmäßig ohne Versatz angeordneten Klappenflügeln bewirkt wird.

Es versteht sich, dass die erfindungsgemäße mehrkanalige Klimaanlage auch für Nichtfahrzeuganwendungen einsetzbar ist, um zwei oder mehr strömungstechnisch parallele Klimatisierungskanäle mit einem Klimatisierungsmedium zu versorgen, dessen Temperatur für wenigstens zwei der Klimatisierungskanäle mit vergleichsweise einfachen Mitteln separat einstellbar ist. Des weiteren kann die erfindungsgemäße Klimaanlage nicht nur, wie gezeigt, als Zweikanal-Klimaanlage ausgelegt sein, sondern auch als solche mit drei oder mehr parallelen Klimatisierungskanälen, denen der Heizkörper gemeinsam zugeordnet ist, wobei für wenigstens zwei von ihnen je ein Kaltluft-Bypasskanal vorgesehen ist. Wenigstens zweien dieser Bypasskanäle ist die Absperrklappeneinheit zugeordnet, um sie wahlweise beide abzusperren oder einen zu öffnen. Im Fall von mehr als zwei Kaltluft-Bypasskanälen kann entweder eine gemeinsame Absperrklappeneinheit mit je einer Absperrklappe pro Bypasskanal vorgesehen werden, oder es können mehrere Absperrklappeneinheiten mit je mindestens zwei Absperrklappen für jeweils zwei Bypasskanäle verwendet werden. So kann z.B. eine Vierkanal-Klimaanlage mit zwei Absperrklappeneinheiten der in den Figuren gezeigten Typen für je zwei der vier Kaltluft-Bypasskanäle ausgerüstet sein.

## Patentansprüche

1. Mehrkanalige Klimaanlage, insbesondere für ein Kraftfahrzeug, mit
- wenigstens zwei strömungstechnisch parallelen, von einem Klimatisierungsmedium durchströmbaren Klimatisierungskanälen (VL, VR) und
- einem den Klimatisierungskanälen gemeinsam zugeordneten, in seiner Heizleistung einheitlich steuerbaren Heizkörper (4), dem Heizleistungssteuermittel (14) zur einheitlichen Steuerung seiner Heizleistung zugeordnet sind,
- einen den Heizkörper (4) umgehenden ersten Bypasskanal (B_{VL}) für den ersten Klimatisierungskanal (VL) und einen den Heizkörper umgehenden zweiten Bypasskanal (B_{VR}) für den zweiten Klimatisierungskanal (VR) und
- eine über ein Betätigungsmittel (10, 11, 18) gemeinsame verstellbare Absperrklappeneinheit (9,17) mit einer ersten Absperrklappe (9a, 17a) für den ersten Bypasskanal und einer zweiten Absperrklappe (9b, 17b) für den zweiten Bypasskanal, **dadurch gekennzeichnet**
- **daß** die Absperrklappeneinheit derart ausgelegt ist, dass in einer ersten Klappenstellung die erste Absperrklappe den ersten Bypasskanal und die zweite Absperrklappe den zweiten Bypasskanal absperrt, in einer zweiten Klappenstellung die erste Absperrklappe den ersten Bypasskanal wenigstens teilweise freigibt und die zweite Absperrklappe den zweiten Bypasskanal absperrt sowie in einer dritten Klappenstellung die erste Absperrklappe den ersten Bypasskanal absperrt und die zweite Absperrklappe den zweiten Bypasskanal wenigstens teilweise freigibt.

2. Mehrkanalige Klimaanlage nach Anspruch 1, weiter **dadurch gekennzeichnet, dass** die Absperrklappeneinheit (9, 17) aus einem Nullstellungsbereich heraus, der die erste Klappenstellung beinhaltet, in entgegengesetzten Verstellrichtungen wahlweise in einen ersten Öffnungsstellungsbereich, der die zweite Klappenstellung beinhaltet, oder einen zweiten Öffnungsstellungsbereich bewegbar ist, der die dritte Klappenstellung beinhaltet, wobei über den ersten Öffnungsstellungsbereich hinweg die erste Absperrklappe (9a, 17a) den Durchlassquerschnitt für den ersten Bypasskanal (B_{VL}) variiert, während die zweite Absperrklappe (9b, 17b) den zweiten Bypasskanal (B_{VR}) geschlossen hält, und über den zweiten Öffnungsstellungsbereich hinweg die zweite Absperrklappe den Durchlassquerschnitt für den zweiten Bypasskanal variiert, während die erste Absperrklappe den ersten Bypasskanal geschlossen hält.

3. Mehrkanalige Klimaanlage nach Anspruch 1 oder 2, weiter **dadurch gekennzeichnet, dass** die beiden Absperrklappen je einen drehbeweglichen Klappenflügel (9a, 9b, 17a, 17b) aufweisen, die axial nebeneinanderliegend drehfest mit einer gemeinsamen Betätigungswelle (10, 18) verbunden sind.

4. Mehrkanalige Klimaanlage nach Anspruch 3, weiter **dadurch gekennzeichnet, dass** die Klappenflügel (9a, 9b) plattenförmig gestaltet sind und die umgebende Gehäusekontur (15) des jeweils zugehörigen Bypasskanals (B_{VL}, B_{VR}) so gestaltet ist, dass der jeweilige Bypasskanal vom zugehörigen Klappenflügel in allen Klappenflügelstellungen innerhalb eines vorgegebenen Drehwinkelintervalls geschlossen gehalten wird.

5. Mehrkanalige Klimaanlage nach Anspruch 3, weiter **dadurch gekennzeichnet, dass** die Klappenflügel (17a, 17b) im Querschnitt sektorförmig gestaltet sind.

## Claims

1. Multi-channel air-conditioning system, in particular for a vehicle, with
- at least two fluidic parallel conditioning channels (VL, VR), through those a conditioning medium can flow and
- a heater (4) whose thermal output is uniformly controllable, which is allocated to the conditioning channels in common and to which are allocated thermal output control means (14) for uniformly controlling its thermal output,
- a first bypass-channel (B_{VL}) for the first conditioning channel (VL), the first bypass-channel (B_{VL}) bypasses the heater (4), and a second bypass-channel (B_{VR}) for the second conditioning channel (VR), the second bypass-channel (B_{VR}) bypasses the heater and
- a via a actuator means (10, 11, 18) combined adjustable shut-off flap unit (9, 17) with a fist shut-off flap (9a, 17a) for the first bypass-channel and a second shut-off flap (9b, 17b) for the second bypass-channel,
**characterized in that**
the shut-off flap unit is dimensioned such that in a first flap position the first shut-off flap closes the first bypass-channel and the second shut-off flap closes the second bypass-channel, and in a second flap position the first shut-off flap opens at least partially the first bypass-channel and the second shut-off flap closes the second bypass-channel and in a third flap position the first shut-off flap closes the first bypass-channel and the second shut-off flap opens at least partially the second bypass-channel.

2. Multi-channel air-conditioning system according to claim 1, further **characterized in that** out of a zero-position range that includes the first flap position, the shut-off flap unit (9, 17) is optionally moveable in opposing positioning directions in a first open position range, which includes the second flap position, or in a second open position range, which includes the third flap position, whereas across the first open position range the first shut-off flap (9a, 17a) varies the aperture cross-section for the first bypass-channel (B_{VL}) while the second shut-off flap (9b, 17b) keeps closed the second bypass-channel (B_{VR}) and across the second open position range the second shut-off flap varies the aperture cross-section for the second bypass-channel while the first shut-off flap keeps closed the first bypass-channel.

3. Multi-channel air-conditioning system according to claim 1 or 2, further **characterized in that** each of both shut-off flaps comprise one rotatable flap wing (9a, 9b, 17a, 17b) which are axially adjoining non-rotatable connected with a common actuation axle (10, 18).

4. Multi-channel air-conditioning system according to claim 3, further **characterized in that** the flap wings (9a, 9b) are formed sheet-shaped and the enclosing housing-contour (15) of the appropriate bypass-channel (B_{VL}, B_{VR}) is formed such that the respective bypass-channel of the appropriate flap wing is kept closed in every flap wing position within a predetermined pivot angle range.

5. Multi-channel air-conditioning system according to claim 3, further **characterized in that** the cross-section of the flap wings (17a, 17b) is formed sector-shaped.

## Revendications

1. Installation de climatisation à canaux multiples, notamment pour un véhicule automobile, comprenant
- au moins deux canaux de climatisation (VL, VR) en parallèle sur le plan de l'écoulement des fluides et pouvant être traversés par un écoulement de fluide de climatisation,
- un corps chauffant (4) associé en commun aux canaux de climatisation, dont la puissance de chauffe peut être commandée de manière uniforme unitaire, et auquel sont associés des moyens de commande de puissance de chauffe (14) pour la commande uniforme unitaire de sa puissance de chauffe,
- un premier canal de dérivation (B_{VL}) contournant le corps chauffant (4) et destiné au premier canal de climatisation (VL), et un deuxième canal de dérivation (B_{VR}) contournant le corps chauffant (4) et destiné au deuxième canal de climatisation (VR), et
- une unité de clapets de fermeture (9, 17) commune, réglable par l'intermédiaire d'un moyen d'actionnement (10, 11, 18), et comprenant un premier clapet de fermeture (9a, 17a) pour le premier canal de dérivation, et un deuxième clapet de fermeture (9b, 17b) pour le deuxième canal de dérivation,
**caractérisée en ce que** l'unité de clapets de fermeture est conçue de façon telle, que dans une première position de clapets, le premier clapet de fermeture ferme le premier canal de dérivation et le deuxième clapet de fermeture ferme le deuxième canal de dérivation, dans une deuxième position de clapets, le premier clapet de fermeture libère au moins partiellement le premier canal de dérivation et le deuxième clapet de fermeture ferme le deuxième canal de dérivation, et dans une troisième position de clapets, le premier clapet de fermeture ferme le premier canal de dérivation et le deuxième clapet de fermeture libère au moins partiellement le deuxième canal de dérivation.

2. Installation de climatisation à canaux multiples selon la revendication 1, par ailleurs **caractérisée en ce que** l'unité de clapets de fermeture (9, 17) peut, à partir d'une plage de position neutre, qui englobe la première position de clapets, être déplacée dans des directions de réglage opposées, sélectivement dans une première plage de position d'ouverture, qui englobe la deuxième position de clapets, ou dans une deuxième plage de position d'ouverture qui englobe la troisième position de clapets, la configuration étant la suivante, à savoir que sur l'étendue de la première plage de position d'ouverture, le premier clapet de fermeture (9a, 17a) fait varier la section de passage pour le premier canal de dérivation (B_{VL}), tandis que le deuxième clapet de fermeture (9b, 17b) maintient fermé le deuxième canal de dérivation (B_{VR}), et sur l'étendue de la deuxième plage de position d'ouverture, le deuxième clapet de fermeture fait varier la section de passage pour le deuxième canal de dérivation, tandis que le premier clapet de fermeture maintient fermé le premier canal de dérivation.

3. Installation de climatisation à canaux multiples selon la revendication 1 ou 2, par ailleurs **caractérisée en ce que** les deux clapets de fermeture présentent chacun une ailette de clapet (9a, 9b, 17a, 17b) mobile en rotation, ces ailettes de clapet, placées axialement l'une à côté de l'autre, étant reliées par une liaison fixe de rotation à un arbre d'actionnement (10, 18) commun.

4. Installation de climatisation à canaux multiples selon la revendication 3, par ailleurs **caractérisée en ce que** les ailettes de clapet (9a, 9b) sont d'une configuration en forme de plaque, et le contour de carter (15) environnant du canal de dérivation (B_{VL}, B_{VR}) respectivement associé est conçu de façon telle que le canal de dérivation respectivement considéré soit maintenu fermé par l'ailette de clapet associée, dans toutes les positions d'ailette de clapet à l'intérieur d'un intervalle angulaire de rotation prédéterminé.

5. Installation de climatisation à canaux multiples selon la revendication 3, par ailleurs **caractérisée en ce que** les ailettes de clapet (17a, 17b) sont, en section transversale, d'une configuration en forme de secteur.
